# EUROPÄISCHE PATENTSCHRIFT

(11) **EP 4 360 516 B1**
(45) Veröffentlichungstag und Bekanntmachung des Hinweises auf die Patenterteilung: **03.09.2025**
(21) Anmeldenummer: 23204464.4
(22) Anmeldetag: 18.10.2023
(51) Int. Cl.: A47J 31/60

(54) **VERFAHREN ZUM ÜBERWACHEN EINES ENTKALKUNGSVORGANGS IN EINER KAFFEEMASCHINE, INSBESONDERE IN EINEM KAFFEE-VOLLAUTOMATEN, ZUM ZUBEREITEN EINES KAFFEEPRODUKTS**
METHOD FOR MONITORING A DECALCIFICATION PROCESS IN A COFFEE MACHINE, IN PARTICULAR IN A FULLY AUTOMATIC COFFEE MACHINE, FOR PREPARING A COFFEE PRODUCT
PROCÉDÉ DE SURVEILLANCE D'UN PROCESSUS DE DÉTARTRAGE DANS UNE MACHINE À CAFÉ, EN PARTICULIER DANS UN AUTOMATE À CAFÉ ENTIÈREMENT DESTINÉ À PRÉPARER UN PRODUIT À CAFÉ

(30) Priorität: 24.10.2022 DE 102022211256
(43) Veröffentlichungstag der Anmeldung: 01.05.2024
(73) Patentinhaber: BSH Hausgeräte GmbH, 81739 München (DE)
(72) Erfinder: Daburger, Josef, 83313 Siegsdorf (DE); Huber, Michael, 83349 Palling (DE); Frank, Theresa, 83236 Übersee (DE); Nerbl, Christian, 83512 Wasserburg am Inn (DE); Sollmann, Martin, 83278 Traunstein (DE); Botros, Peter, 83301 Traunreut (DE); Schattkowski, Luka, 83224 Grassau (DE); Fischer, Sebastian, 83022 Rosenheim (DE)

(56) Entgegenhaltungen:
- DE-A1- 102013 106 148
- DE-B3- 102019 216 311
- DE-U1- 202020 105 834

## Beschreibung

Die vorliegende Erfindung betrifft ein Verfahren zum Überwachen eines Entkalkungsvorgangs in einer Kaffeemaschine, insbesondere in einem Kaffee-Vollautomaten, zum Zubereiten eines Kaffeeprodukts. Die Erfindung betrifft ferner eine Kaffeemaschine, die zur Durchführung dieses Verfahrens eingerichtet/programmiert ist. Die Erfindung betrifft ferner eine Anordnung mit einer solchen Kaffeemaschine und mit einem datenübertragbar mit der Kaffeemaschine verbundenen Server.

Ein Verfahren zur Durchführung eines Entkalkungsvorgangs an einer Kaffeemaschine ist z.B. aus der DE 10 2013 106 148 A1 bekannt.

In Gebrauchsanweisungen von modernen Kaffeemaschinen wird häufig darauf hingewiesen, welche Wassermenge bei Zugabe eines gebrauchsüblichen Entkalkungsmittels - etwa in Form einer Entkalkungstablette - verwendet werden soll, um das für einen Entkalkungsvorgang erforderliche Mischungsverhältnis aus Wasser und Entkalkungsmittel sicherzustellen. Bei einem herkömmlichen Entkalkungsvorgang wird das im Wassertank der Kaffeemaschine vorhandene Wasser mit einem Entkalkungsmittel - beispielsweise in Form einer Tablette oder dergleichen - vermischt und auf diese Weise eine zum Entkalken der Kaffeemaschine verwendbare Entkalkungsflüssigkeit erzeugt.

Für einen erfolgreichen Entkalkungsprozess, mittels welchem die gewünschte Entkalkungswirkung erzielt wird, ist es wichtig, dass die verwendete Entkalkungsflüssigkeit ein vorgesehenes Mischungsverhältnis aus Entkalkungsmittel und Wasser aufweist; denn bei einem zu geringen Mischungsverhältnis, wie es typischerweise entsteht, wenn die im Wassertank vorhandene Wassermenge größer ist als für den Entkalkungsvorgang vorgesehen, kann die mittels des Entkalkungsvorgangs erzielte Entkalkungswirkung in erheblichem Maße herabgesetzt werden. Dies wiederum kann zur Folge haben, dass trotz erfolgter Entkalkung nicht unerhebliche Kalkrückstände in der Kaffeemaschine zurückbleiben, was sich negativ auf die Lebensdauer der Kaffeemaschine auswirken kann.

Es ist daher eine Aufgabe der vorliegenden Erfindung, ein verbessertes Verfahren zum Überwachen eines Entkalkungsvorgangs einer Kaffeemaschine zu schaffen, bei welchem insbesondere die Gefahr der Verwendung einer Entkalkungsflüssigkeit mit falschem Mischungsverhältnis aus Wasser und Entkalkungsmittel reduziert oder sogar ausgeschlossen ist.

Diese Aufgabe wird erfindungsgemäß durch den Gegenstand der unabhängigen Patentansprüche gelöst. Vorteilhafte Ausführungsformen sind Gegenstand der abhängigen Patentansprüche.

Grundidee der Erfindung ist demnach, die bei einem vorausgehenden Entkalkungsvorgang verwendete Wassermenge zu ermitteln oder zumindest abzuschätzen und ein Warnsignal zu erzeugen, falls diese Ermittlung bzw. Abschätzung ergibt, dass die verwendete Wassermenge größer war als ein vorbestimmter Schwellwert. Auf Basis des Warnsignals kann der Benutzer nach Beendigung des Entkalkungsvorgangs darauf hingewiesen werden, dass folglich mehr Wasser für den Entkalkungsvorgang verwendet und mit einer vorbestimmten Menge an Entkalkungsmittel - etwa in Form einer Entkalkungstablette - vermischt wurde, als eigentlich vorgesehen. Dies bedeutet, dass das Mischungsverhältnis der aus dem Wasser und aus dem Entkalkungsmittel gebildeten Entkalkungsflüssigkeit beim Entkalkungsvorgang kleiner war als für eine hinreichend wirksame Entkalkung erforderlich. Damit wiederum können die oben erwähnten nachteiligen Konsequenzen wie etwa das Zurückbleiben von unerwünschten Kalkrückständen einhergehen. Mittels der erfindungsgemäßen Erzeugung eines Warnsignals wird der Benutzer auf besagte Missstände hingewiesen und kann folglich entsprechende Gegenmaßnahmen zum Schutz der Kaffeemaschinebeispielsweise eine Wiederholung des Entkalkungsvorgangs mit korrektem oder zumindest höherem Mischungsverhältnis - ergreifen.

Das erfindungsgemäße Verfahren dient zum Überwachen eines Entkalkungsvorgangs in einer Kaffeemaschine, insbesondere in einem Kaffee-Vollautomaten, die zum Zubereiten eines Kaffeeprodukts ausgebildet ist. Beim erfindungsgemäßen Verfahren wird die für den Entkalkungsvorgang verwendete Menge an Wasser ermittelt oder zumindest abgeschätzt. Erfindungsgemäß wird ein Warnsignal erzeugt, falls die ermittelte Menge an Wasser einen vorbestimmten kritischen Schwellwert überschreitet.

Bei einer bevorzugten Ausführungsform wird das Warnsignal nur dann erzeugt, wenn bei wenigstens zwei, vorzugsweise mehreren, insbesondere aufeinanderfolgend, ausgeführten Entkalkungsvorgängen wenigstens zwei Mal der vorbestimmte kritische Schwellwert überschritten wurde. Auf diese Weise kann genauer und flexibler festgelegt werden, wie oft ein Entkalkungsvorgang mit zu geringem Mischungsverhältnis aus Wasser und Entkalkungsmittel durchgeführt werden darf, ehe ein Warnsignal erzeugt wird. Somit kann insbesondere vermieden werden, das Alarm ausgelöst wird, wenn nur ein einziges Mal ein zu geringes Mischungsverhältnis verwendet wurde.

Bei einer weiteren bevorzugten Ausführungsform fördert während des Entkalkungsvorgangs eine Wasserpumpe der Kaffeemaschine zumindest zeitweise Wasser aus einem Wassertank der Kaffeemaschine. Die Zeitdauer, während welcher die Wasserpumpe aktiv Wasser aus dem Wassertank, typischerweise in eine Brühkammer der Kaffeemaschine, fördert, wird im Folgenden als "Pumpenlaufzeit" bezeichnet. Bei dieser Ausführungsform wird die Menge an für den Entkalkungsvorgang verwendetem Wasser auf Basis der Pumpenlaufzeit während des Entkalkungsvorgangs ermittelt. Hierbei wird ausgenutzt, dass die Menge an mittels der Wasserpumpe gefördertem Wasser derjenigen Menge an Wasser entspricht, die für den Entkalkungsvorgang verwendet wird, und dass außerdem die Menge an verwendeten Wasser mit zunehmender Pumpenlaufzeit zunimmt. Der genaue Zusammenhang zwischen Pumpenlaufzeit und Menge an für den Entkalkungsvorgang verwendeten Wasser kann hierbei auf vielfältige Art und Weise festgelegt sein. Insbesondere können entsprechende Betriebsdaten der Kaffeemaschine herangezogen werden oder die Menge an verwendetem Wasser ausgehend von der Pumpenlaufzeit abgeschätzt werden. Insbesondere kann ein funktionaler Zusammenhang zwischen Pumpenlaufzeit und Menge an verwendeten Wasser angenommen werden, der in einer Speichereinheit der Kaffeemaschine abgelegt ist. Dieser Zusammenhang kann insbesondere analytisch oder numerisch, in letzterem Fall in Form einer Vielzahl von Wertepaaren aus Pumpenlaufzeit und zugeordneter Menge an gefördertem und somit verwendeten Wasser, festgelegt sein. Der funktionale Zusammenhang kann in einer Speichereinheit der Kaffeemaschine abgelegt sein und aus diesem zur Durchführung des erfindungsgemäßen Verfahrens aufgerufen werden.

Bei einer bevorzugten Ausführungsform des erfindungsgemäßen Verfahrens wird die Pumpenlaufzeit auf Basis einer Vorgangsdauer des gesamten Entkalkungsvorgangs ermittelt. Da sich die Pumpenlaufzeit nicht über den ganzen Entkalkungsvorgang hinweg erstrecken muss, ist der Wert der Pumpenlaufzeit höchstens gleich der Vorgangsdauer des gesamten Entkalkungsvorgangs, typischerweise aber kleiner als diese Vorgangsdauer. Durch Berücksichtigung entsprechender weiterer Betriebsdaten der Kaffeemaschine, insbesondere betreffend den Verkalkungsvorgang, ist es möglich, aus der Vorgangsdauer des Entkalkungsvorgangs auf die Pumpenlaufzeit zu schließen. Im Zuge einer stark vereinfachten Abschätzung kann die Vorgangsdauer mit der Pumpenlaufzeit gleichgesetzt werden. Denkbar ist aber auch eine Abschätzung der Pumpenlaufzeit in Abhängigkeit von der Vorgangsdauer, insbesondere unter Berücksichtigung verschiedener Betriebsdaten. Alternativ dazu ist auch die Festlegung eines funktionalen Zusammenhangs zwischen Vorgangsdauer und Pumpenlaufzeit möglich, wobei hierbei die Pumpenlaufzeit nicht nur als Funktion der Vorgangsdauer, sondern auch in Abhängigkeit von wenigstens einem weiteren Parameter, typischerweise einem Betriebsparameter der Kaffeemaschine, festgelegt werden kann.

Besonders bevorzugt wird also zur Ermittlung der Pumpenlaufzeit auf Basis der Vorgangsdauer die Vorgangsdauer mit wenigstens einem weiteren Betriebsparameter der Kaffeemaschine verknüpft.

Bei einer weiteren bevorzugten Ausführungsform des erfindungsgemäßen Verfahrens wird vorgeschlagen, dass im Zuge des Entkalkungsvorgangs die Vorgangsdauer von der Kaffeemaschine an einen datenübertragbar mit der Kaffeemaschine verbundenen Server übertragen und dort abgespeichert wird. Dies bedeutet, dass im Zuge der Durchführung des erfindungsgemäßen Verfahrens, also zur Ermittlung bzw. Abschätzung der für den Entkalkungsvorgang verwendeten Menge an Wasser die gesuchte Vorgangsdauer des Entkalkungsvorgangs auf dem Server zur Verfügung steht und von diesem abgerufen werden kann. Wird das erfindungsgemäße Verfahren in der Kaffeemaschine ausgeführt, so wird also der Wert der Vorgangdauer vom Server an die Kaffeemaschine zurück übermittelt.

Gemäß einer vorteilhaften Weiterbildung wird das Warnsignal von einer Anzeigeeinrichtung der Kaffeemaschine angezeigt. Auf diese Weise kann der Benutzer der Kaffeemaschine, der den Entkalkungsvorgang durchführt, darauf hingewiesen werden, dass aufgrund einer zu hohen verwendeten Wassermenge die Entkalkung beeinträchtigt sein könnte, sodass der Benutzer gegebenenfalls entsprechende Gegenmaßnahmen einleiten kann.

Bei einer anderen bevorzugten Ausführungsform wird das Warnsignal an ein mobiles Gerät, insbesondere ein Smartphone, übertragen und von diesem angezeigt. Die Übertragung kann dabei direkt von der Kaffeemaschine an das mobile Gerät bzw. Smartphone erfolgen. Besonders bevorzugt ist aber eine indirekte Übertragung von der Kaffeemaschine über besagten Server an das mobile Gerät bzw. das Smartphone vorstellbar. Somit kann ausgenutzt werden, dass besagtes mobiles Gerät in der Regel ohnehin über den Server mit der Kaffeemaschine verbunden sein kann, um diese zu steuern oder von dieser erhaltene und an den Server übertragene Informationen anzuzeigen.

Gemäß einer weiteren vorteilhaften Weiterbildung kann zusätzlich zum Warnsignal wenigstens ein Hinweis zum korrekten Durchführen des Entkalkungsvorgangs angezeigt werden, so dass bei Befolgung dieses Hinweises bei zukünftigen Entkalkungsvorgängen die verwendete Menge an Wasser den vorbestimmten kritischen Schwellwert nicht mehr überschreitet. Auf diese Weise wird der Nutzer der Kaffeemaschine dazu angeleitet, den Entkalkungsvorgang wie vorgesehen durchzuführen, so dass auch die vorgesehene Entkalkungswirkung sichergestellt ist.

Gemäß einer weiteren vorteilhaften Weiterbildung können verschiedenen Bauformen der Kaffeemaschine individuelle vorbestimmte kritische Schwellwerte zugeordnet sein.

Die Erfindung betrifft ferner ein Computerprogrammprodukt, welches durch ein Computersystem, insbesondere die Steuerungs-/Regelungseinrichtung der Kaffeemaschine, auslesbare Anweisungen enthält, derart, dass das Computersystem beim Ausführen des Computerprogrammprodukts das voranstehend vorgestellte, erfindungsgemäße Verfahren ausführt. Die voranstehend erläuterten Vorteile des erfindungsgemäßen Verfahren gelten somit auch für das erfindungsgemäße Computerprogrammprodukt.

Die Erfindung betrifft außerdem eine Kaffeemaschine, insbesondere einen Kaffeevollautomaten, zum Zubereiten eines Kaffeeprodukts. Die Kaffeemaschine umfasst eine Brühkammer zum Zubereiten des Kaffeeprodukts, insbesondere aus Kaffeebohnen und Wasser, sowie einen Wassertank zum Bevorraten des Wassers. Ferner umfasst die Kaffeemaschine eine Wasserpumpe zum Fördern des Wassers aus dem Wassertank, bevorzugt in die Brühkammer. Ferner umfasst die Kaffeemaschine eine Steuerungs-/Regelungseinrichtung zum Steuern der Zubereitung des Kaffeeprodukts, die außerdem zur Durchführung des voranstehend vorgestellten, erfindungsgemäßen Verfahrens eingerichtet/programmiert ist. Die voranstehend erläuterten Vorteile des erfindungsgemäßen Verfahren übertragen sich daher auf die erfindungsgemäße Kaffeemaschine.

Die Erfindung betrifft ferner eine Anordnung mit einer voranstehend vorgestellten, erfindungsgemäßen Kaffeemaschine. Die Anordnung umfasst weiterhin einen Server, der datenübertragbar oder datenübertragend mit der Kaffeemaschine, insbesondere der Steuerungs-/Regelungseinrichtung der Kaffeemaschine, verbunden ist, so dass insbesondere Daten betreffend den Entkalkungsvorgang zwischen der Kaffeemaschine und dem Server ausgetauscht werden können. Die voranstehend erläuterten Vorteile des erfindungsgemäßen Verfahren übertragen sich daher auf die erfindungsgemäße Anordnung.

Bei einer bevorzugten Ausführungsform der erfindungsgemäßen Anordnung umfasst diese ferner ein mobiles Gerät, insbesondere ein Smartphone, welches datenübertragbar mit der Kaffeemaschine oder/und dem Server verbunden ist, so dass vom mobilen Gerät das Warnsignal angezeigt werden kann.

Bei einer anderen bevorzugten Ausführungsform wird das erfindungsgemäße Verfahren bzw. das erfindungsgemäße Computerprogrammprodukt nicht in der Kaffeemaschine, sondern in dem mobilen Gerät ausgeführt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Ein bevorzugtes Ausführungsbeispiel der Erfindung ist in den Zeichnungen dargestellt und wird in der nachfolgenden Beschreibung näher erläutert.

Es zeigen, jeweils schematisch:
- Fig. 1: ein Beispiel einer erfindungsgemäßen Anordnung mit einer erfindungsgemäßen Kaffeemaschine,
- Fig. 2: ein das erfindungsgemäße Verfahren beispielhaft illustrierende Ablaufdiagramm.

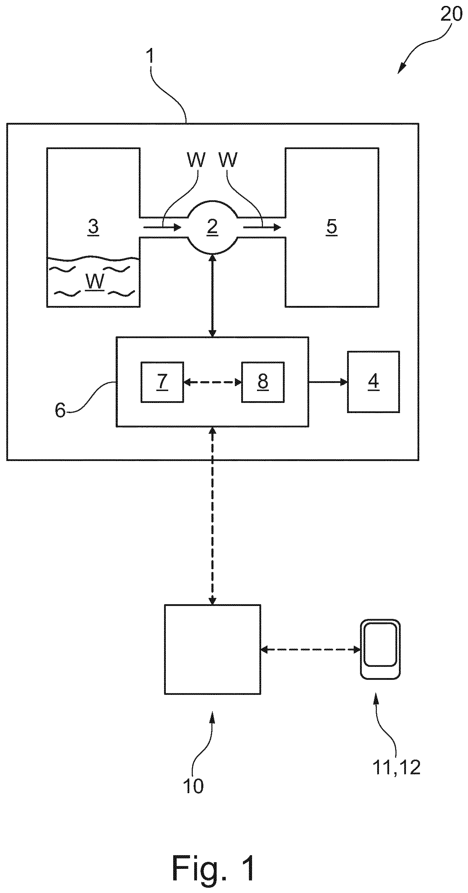

Figur 1 illustriert in schematischer Darstellung ein Beispiel einer erfindungsgemäßen Anordnung 20, die eine erfindungsgemäße Kaffeemaschine 1 umfasst. Die Anordnung 20 umfasst weiterhin einen Server 10, der datenübertragend mit der Kaffeemaschine 1 verbunden ist, so dass Daten betreffend einen Entkalkungsvorgang EKV zwischen der Kaffeemaschine 1 und dem Server 10 ausgetauscht werden können. Die Anordnung 20 umfasst auch ein mobiles Gerät 11, beispielsweise ein Smartphone 12, welches datenübertragbar mit der Kaffeemaschine 1 verbunden ist.

Die Kaffeemaschine 1 kann ein Kaffeevollautomat zum Zubereiten eines Kaffeeprodukts sein. Die Kaffeemaschine 1 umfasst eine Brühkammer 5 zum Zubereiten des Kaffeeprodukts, insbesondere aus gemahlenen Kaffeebohnen (nicht gezeigt) und Wasser W, sowie einen Wassertank 3 zum Bevorraten des Wassers W. Ferner umfasst die Kaffeemaschine 1 eine Wasserpumpe 2 zum Fördern des Wassers W vom Wassertank 3 in die Brühkammer 5. Außerdem umfasst die Kaffeemaschine 1 eine Steuerungs-/Regelungseinrichtung 6 zum Steuern der Zubereitung des Kaffeeprodukts, die außerdem auch zur Durchführung des voranstehend vorgestellten, erfindungsgemäßen Verfahrens eingerichtet/ programmiert ist. Das Verfahren kann technisch in Form eines Computerprogrammprodukts, welches durch ein von einer Ausführungseinheit 7 der Steuerungs-/Regelungseinrichtung 6 auslesbare und ausführbare Anweisungen enthält, umgesetzt sein, derart, dass die Steuerungs-/Regelungseinrichtung 6 beim Ausführen des Computerprogrammprodukts das voranstehend vorgestellte, erfindungsgemäße Verfahren ausführt.

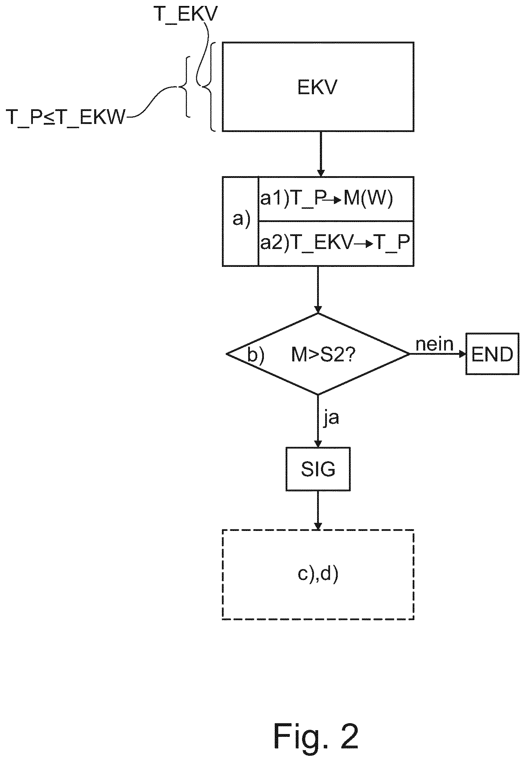

Im Folgenden wird anhand des Ablaufdiagramms der Figur 2 das erfindungsgemäße Verfahren beispielhaft erläutert. Das Verfahren dient zum Überwachen eines in der Kaffeemaschine 1 ausgeführten Entkalkungsvorgangs EKV, der vor Durchführung des erfindungsgemäßen Verfahrens ausgeführt und abgeschlossen wird. Während des Entkalkungsvorgangs EKV fördert die Wasserpumpe 2 der Kaffeemaschine 1 (vgl. Figur 1) Wasser W aus einem Wassertank 3 der Kaffeemaschine 1.

Beim erfindungsgemäßen Verfahren wird in einer Maßnahme a) des Verfahrens die für den Entkalkungsvorgang EKV verwendete Menge M an Wasser W ermittelt oder zumindest abgeschätzt. Gemäß einer zweiten Maßnahme b) wird ein Warnsignal SIG erzeugt, falls die ermittelte Menge M an Wasser W einen vorbestimmten kritischen Schwellwert S überschreitet. Andernfalls wird das Verfahren ohne Erzeugung eines Warnsignals beendet (END). Der Schwellwert S kann in einer mit der Ausführungseinheit 7 zusammenwirkenden Speichereinheit 8 der Steuerungs-/Regelungseinrichtung 6 (vgl. Figur 1) abgelegt sein. Hierbei können für unterschiedliche Bauformen der Kaffeemaschine 1 entsprechend unterschiedliche vorbestimmte kritische Schwellwerte S vorgesehen sein.

Im Zuge von Maßnahme a) wird in einer Untermaßnahme a1) die Menge M an für den Entkalkungsvorgang EKV verwendetem Wasser W auf Basis einer der Pumpenlaufzeit T_P der Wasserpumpe 2 während des Entkalkungsvorgangs EKV ermittelt. Als "Pumpenlaufzeit T_P" wird dabei vorliegend diejenige Zeitdauer verstanden, während welcher die Wasserpumpe 2 im Zuge des Entkalkungsvorgangs EKV aktiv Wasser aus dem Wassertank 3 fördert. Es wird also beim erfindungsgemäßen Verfahren ausgenutzt, dass während des Entkalkungsvorgangs EKV die Menge an mittels der Wasserpumpe 3 gefördertem Wasser W auch derjenigen Menge an Wasser entspricht, die für den Entkalkungsvorgang EKV verwendet wurde, und dass außerdem die Menge an gefördertem und somit verwendetem Wasser W mit zunehmender Pumpenlaufzeit T_P zunimmt.

Der Zusammenhang zwischen Pumpenlaufzeit T_P und Menge an für den Entkalkungsvorgang verwendeten Wasser W kann auf vielfältige Art und Weise festgelegt sein. Insbesondere können entsprechende Betriebsdaten herangezogen werden oder die Menge an verwendeten Wasser W ausgehend von der Pumpenlaufzeit abgeschätzt werden. Insbesondere kann ein funktionaler Zusammenhang zwischen der Pumpenlaufzeit T_P und der Menge M an verwendetem Wasser W angenommen werden, der in der Speichereinheit 8 der Kaffeemaschine abgelegt sein kann. Dieser Zusammenhang kann insbesondere analytisch oder numerisch, in letzterem Fall in Form einer Vielzahl von Wertepaaren aus Pumpenlaufzeit T_P und zugeordneter Menge M an gefördertem und somit verwendetem Wasser W festgelegt sein. Auch dieser Zusammenhang kann in der Speichereinheit 8 der Steuerungs-/Regelungseinrichtung 6 abgelegt sein und zur Durchführung des erfindungsgemäßen Verfahrens ausgelesen werden.

Im Beispielszenario wird die gesuchte Pumpenlaufzeit T_P in einer Untermaßnahme a2) der Maßnahme a) auf Grundlage bzw. in Abhängigkeit einer Vorgangsdauer T_EKV des gesamten Entkalkungsvorgangs EKV ermittelt.

Da sich die Pumpenlaufzeit T_P nicht über den ganzen Entkalkungsvorgang EKV hinweg erstrecken muss, ist der Wert der Pumpenlaufzeit T_P immer kleiner gleich der Vorgangsdauer des gesamten Entkalkungsvorgangs EKV. Durch Verknüpfung mit entsprechenden Betriebsparametern der Kaffeemaschine 1, insbesondere hinsichtlich des Verkalkungsvorgangs EKV, ist es möglich, aus der Vorgangsdauer des Entkalkungsvorgangs EKV auf die Pumpenlaufzeit T_P zu schließen.

Im Extremfall einer relativ ungenauen Abschätzung kann die Vorgangsdauer auch mit der Pumpenlaufzeit T_P gleichgesetzt werden. Denkbar ist aber auch eine Abschätzung der Pumpenlaufzeit T_P in Abhängigkeit von der (Entkalkungs-)Vorgangsdauer T_EKV, wobei verschiedene Betriebsdaten der Kaffeemaschine 1 berücksichtigt werden können. Alternativ dazu ist auch die Festlegung eines funktionalen Zusammenhangs f zwischen Vorgangsdauer T_EKV und der Pumpenlaufzeit T_P möglich, also T_P = f (T_EKV). Hierbei kann die Pumpenlaufzeit T_P nicht nur als Funktion der Vorgangsdauer T_EKV, sondern auch in der Fähigkeit von wenigstens einem weiteren Parameter, typischerweise einem Betriebsparameter der Kaffeemaschine 1, festgelegt werden. Zweckmäßig wird also zur Ermittlung der Pumpenlaufzeit T_P auf Basis der Vorgangsdauer die Vorgangsdauer T_EKV des Entkalkungsvorgangs EKV mit weiteren Betriebsdaten der Kaffeemaschine 1 verknüpft.

In einer Variante des erfindungsgemäßen Verfahrens wird im Zuge des Entkalkungsvorgangs EKV die Vorgangsdauer T_EKV von der Kaffeemaschine 1 an einen externen, also nicht zur Kaffeemaschine 1 gehörigen, gleichwohl datenübertragbar mit der Kaffeemaschine 1 verbundenen Server 10 übertragen und dort abgespeichert. Dies bedeutet, dass im Zuge der Durchführung des erfindungsgemäßen Verfahrens, also zur Ermittlung der für den Entkalkungsvorgang EKV verwendeten Menge an Wasser W die gesuchte Vorgangsdauer T_EKV des Entkalkungsvorgangs EKV auf dem Server 10 zur Verfügung steht und von diesem abgerufen werden kann. Wird das erfindungsgemäße Verfahren in der Kaffeemaschine 1 ausgeführt, so kann der auf dem Server 10 gespeicherte der Wert der Vorgangdauer T_EKV vom Server 10 an die Kaffeemaschine 1 zurück übertragen werden.

Im Beispiel wird das gegebenenfalls erzeugte Warnsignal SIG von einer Anzeigeeinrichtung 4 der Kaffeemaschine 1 angezeigt. Auf diese Weise kann der Benutzer der Kaffeemaschine 1, der die Ausführung des Entkalkungsvorgangs EKV veranlasst hat, darauf hingewiesen werden, dass aufgrund einer zu großen verwendeten Wassermenge und, damit einhergehend, eines zu geringen Mischungsverhältnisses von Wasser und Entkalkungsmittel das Ergebnis der Entkalkung beeinträchtigt sein könnte. In diesem Fall kann sich der Benutzer dazu veranlasst sehen, entsprechende Gegenmaßnahmen - beispielsweise eine Wiederholung des Entkalkungsvorgangs EKV mit geändertem Mischungsverhältnis - einzuleiten. Die Anzeigeeinrichtung 4 kann eine optische oder akustische Anzeigeeinrichtung 4 sein. Entsprechend kann ein optisches Warnsignal dargestellt oder ein akustisches Warnsignal ausgegeben werden.

In einer Variante des Beispiels kann das Warnsignal SIG in einer optionalen Maßnahme c) des Verfahrens über den Server 10 an das mobile Gerät 11 bzw. das Smartphone 12 übertragen und von diesem angezeigt werden. Die Übertragung kann dabei direkt von der Kaffeemaschine 1 an das mobile Gerät 11 bzw. Smartphone 12 erfolgen. Bevorzugt ist aber eine indirekte Übertragung von der Kaffeemaschine 1 über besagten Server 10 an das mobile Gerät 11 bzw. an das Smartphone 12 vorstellbar. Somit kann ausgenutzt werden, dass besagtes mobiles Gerät 11 typischerweise ohnehin über den Server 10 mit der Kaffeemaschine 1 verbunden ist, um diese zu steuern oder von dieser an den Server 10 übertragene Informationen anzuzeigen.

Optional ist es vorstellbar, in einer weiteren Maßnahme d) des Verfahrens einen Hinweis zum korrekten Durchführen des Entkalkungsvorgangs EKV auszugeben. Besagter Hinweis kann den Nutzer der Kaffeemaschine 1 dazu anleiten, den Entkalkungsvorgang EKV so durchzuführen, dass besagter Schwellwert für den Entkalkungsvorgang EKV zu verwendendem Wasser W bei zukünftigen Entkalkungsvorgängen nicht mehr überschritten wird.

In einer weiteren Variante des erfindungsgemäßen Verfahrens wird das Warnsignal SIG nur dann erzeugt, wenn bei wenigstens zwei, vorzugsweise mehreren, insbesondere unmittelbar aufeinanderfolgend, ausgeführten Entkalkungsvorgängen EKV wenigstens zwei Mal der vorbestimmten kritischen Schwellwert S überschritten wurde. Auf diese Weise kann genauer und flexibler festgelegt werden, wie oft ein Entkalkungsvorgang EKV mit nicht vorgesehenem Mischungsverhältnis von Wasser W zu Entkalkungsmittel durchgeführt werden darf, ehe das Warnsignal SIG erzeugt wird. Somit kann insbesondere vermieden werden, das nur bei einmalig falschem Mischungsverhältnis Alarm ausgelöst wird.

In einer weiteren Variante wird das erfindungsgemäße Verfahren bzw. das erfindungsgemäße Computerprogrammprodukt nicht in der Kaffeemaschine 1, sondern in dem mobilen Gerät 11 bzw. Smartphone 12 ausgeführt.

### Bezugszeichen

- 1: Kaffeemaschine
- 2: Wassertank
- 3: Wasserpumpe
- 4: Anzeigeeinrichtung
- 5: Brühkammer
- 6: Steuerungs-/Regelungseinrichtung
- 7: Ausführungseinheit
- 8: Speichereinheit
- 10: Server
- 11: mobiles Gerät
- 12: Smartphone
- 20: Anordnung
- SIG: Warnsignal
- W: Wasser
- M: Menge
- EKV: Entkalkungsvorgang
- T_EKV: Vorgangsdauer (Entkalkungsvorgang)
- T_P: Pumpenlaufzeit

## Patentansprüche

1. Verfahren zum Überwachen eines Entkalkungsvorgangs (EKV) in einer Kaffeemaschine (1), insbesondere in einem Kaffee-Vollautomaten, zum Zubereiten eines Kaffeeprodukts,
gemäß welchem die für einen zuvor ausgeführten Entkalkungsvorgang (EKV) verwendete Menge (M) an Wasser (W) ermittelt oder zumindest abgeschätzt wird und ein Warnsignal (SIG) erzeugt wird, falls die ermittelte Menge (M) an Wasser (W) einen vorbestimmten kritischen Schwellwert (S) überschreitet.

2. Verfahren nach Anspruch 1,
**dadurch gekennzeichnet, dass**
das Warnsignal (SIG) nur dann erzeugt wird, wenn bei wenigstens zwei, vorzugsweise mehreren, insbesondere aufeinanderfolgend, ausgeführten Entkalkungsvorgängen wenigstens zwei Mal der vorbestimmte kritische Schwellwert (S) überschritten wurde.

3. Verfahren nach Anspruch 1 oder 2,
**dadurch gekennzeichnet, dass**
- während des Entkalkungsvorgangs (EKV) eine Wasserpumpe (2) der Kaffeemaschine (1) zumindest zeitweise Wasser (W) aus einem Wassertank (3) der Kaffeemaschine (1) fördert,
- eine Menge (M) an für den Entkalkungsvorgang (EKV) verwendetem Wasser (W) auf Basis einer Pumpenlaufzeit (T_P) der Wasserpumpe (2) während des Entkalkungsvorgangs (EKV) ermittelt wird.

4. Verfahren nach Anspruch 3,
**dadurch gekennzeichnet, dass**
die Pumpenlaufzeit (T_P) auf Basis einer Vorgangsdauer (T_EKV) des gesamten Entkalkungsvorgangs (EKV) ermittelt wird.

5. Verfahren nach Anspruch 3 oder 4,
**dadurch gekennzeichnet, dass**
zur Ermittlung der Pumpenlaufzeit (T_P) auf Basis der Vorgangsdauer (T_EKV) die Vorgangsdauer mit wenigstens einem Betriebsparameter der Kaffeemaschine (1) verknüpft werden.

6. Verfahren nach Anspruch 4 oder 5,
**dadurch gekennzeichnet, dass**
- im Zuge des Entkalkungsvorgangs (EKV) die Vorgangsdauer (T_EKV) von der Kaffeemaschine (1) an einen datenübertragbar mit der Kaffeemaschine (1) verbundenen Server (10) übertragen wird,
- die Vorgangsdauer (T_EKV) zur Ermittlung der für den Entkalkungsvorgang (EKV) verwendeten Menge (M) an Wasser (W) vom Server (10) abgerufen wird.

7. Verfahren nach einem der vorhergehenden Ansprüche,
**dadurch gekennzeichnet, dass**
das Warnsignal (SIG) von einer Anzeigeeinrichtung (4) der Kaffeemaschine (1) angezeigt wird.

8. Verfahren nach einem der vorhergehenden Ansprüche,
**dadurch gekennzeichnet, dass**
das Warnsignal (SIG) an ein mobiles Gerät (11), insbesondere ein Smartphone (12), übertragen und von diesem angezeigt wird.

9. Verfahren nach einem der vorhergehenden Ansprüche,
**dadurch gekennzeichnet, dass**
zusätzlich zum Warnsignal (SIG) ein Hinweis, wie ein zukünftiger Entkalkungsvorgang (EKV) mit einem zulässigen Mischungsverhältnis aus Wasser (W) und Entkalkungsmittel durchgeführt werden kann, angezeigt wird, so dass die verwendete Menge an Wasser (W) den vorbestimmten Schwellwert (S) nicht überschreitet, angezeigt wird.

10. Verfahren nach einem der vorhergehenden Ansprüche,
**dadurch gekennzeichnet, dass**
verschiedenen Bauformen der Kaffeemaschine (1) individuelle vorbestimmte kritische Schwellwerte (S) zugeordnet werden.

11. Computerprogrammprodukt,
welches durch ein Computersystem auslesbare Anweisungen enthält, derart, dass das Computersystem beim Ausführen des Computerprogrammprodukts das Verfahren nach einem der Ansprüche 1 bis 10 ausführt.

12. Kaffeemaschine (1), insbesondere Kaffeevollautomat, zum Zubereiten eines Kaffeeprodukts,
- mit einem Brühkammer (5) zum Zubereiten des Kaffeeprodukts, insbesondere aus Kaffeebohnen und Wasser (W),
- mit einem Wassertank (2) zum Bevorraten des Wassers (W),
- mit einer Wasserpumpe (2) zum Fördern des Wassers (W), bevorzugt aus dem Wassertank (3), besonders bevorzugt in die Brühkammer (5),
- mit einer Steuerungs-/Regelungseinrichtung (6) zum Steuern der Zubereitung des Kaffeeprodukts, die zur Durchführung des Verfahrens nach einem der Ansprüche 1 bis 10 eingerichtet/programmiert ist.

13. Anordnung (20),
mit einer Kaffeemaschine (1) nach Anspruch 12,
mit einem Server (10), der datenübertragbar oder datenübertragend mit der Kaffeemaschine (1), insbesondere der Steuerungs-/Regelungseinrichtung (6) der Kaffeemaschine (1), verbunden ist, so dass Daten betreffend den Entkalkungsvorgang (EKV) zwischen der Kaffeemaschine (1) und dem Server (10) ausgetauscht werden können.

14. Anordnung nach Anspruch 13,
ferner umfassend ein mobiles Gerät (11), insbesondere ein Smartphone (12), welches datenübertragbar mit der Kaffeemaschine (1) oder/und dem Server (10) verbunden ist, so dass vom mobilen Gerät das Warnsignal angezeigt werden kann.

15. Anordnung nach Anspruch 14,
**dadurch gekennzeichnet, dass**
dass das Verfahren in dem mobilen Gerät (11) ausgeführt wird.

## Claims

1. Method for monitoring a decalcification process (EKV) in a coffee machine (1), in particular in a fully automatic coffee machine, for preparing a coffee product, according to which method the quantity (M) of water (W) used for the decalcification process (EKV) previously executed is ascertained or is at least estimated and a warning signal (SIG) is generated if the ascertained quantity (M) of water (W) exceeds a predetermined critical threshold value (S).

2. Method according to claim 1,
**characterised in that**
the warning signal (SIG) is only then generated if the predetermined critical threshold value (S) has been exceeded at least twice during at least two, preferably a number of, in particular successively executed decalcification processes.

3. Method according to claim 1 or 2,
**characterised in that**
- a water pump (2) of the coffee machine (1) at least temporarily conveys water (W) from a water tank (3) of the coffee machine (1) during the decalcification process (EKV),
- a quantity (M) of water (W) used for the decalcification process (EKV) is ascertained on the basis of a pump running time (T_P) of the water pump (2) during the decalcification process (EKV).

4. Method according to claim 3,
**characterised in that**
the pump running time (T_P) is ascertained on the basis of a process duration (T_EKV) of the entire decalcification process (EKV).

5. Method according to claim 3 or 4,
**characterised in that**
the process duration is linked to at least one operating parameter of the coffee machine (1) for the purpose of ascertaining the pump running time (T_P) on the basis of the process duration (T_EKV).

6. Method according to claim 4 or 5,
**characterised in that**
- as part of the decalcification process (EKV), the process duration (T_EKV) of the coffee machine (1) is transferred to a server (10) which is connected to the coffee machine (1) in a manner in which data can be transferred,
- the process duration (T_EKV) for ascertaining the quantity (M) of water (W) used for the decalcification process (EKV) is retrieved from the server (10).

7. Method according to one of the preceding claims,
**characterised in that**
the warning signal (SIG) is displayed by a display facility (4) of the coffee machine (1).

8. Method according to one of the preceding claims,
**characterised in that**
the warning signal (SIG) is transferred to a mobile device (11), in particular a smartphone (12), and is displayed thereby.

9. Method according to one of the preceding claims,
**characterised in that**
a notification as to how a future decalcification process (EKV) can be carried out with an acceptable mixing ratio of water (W) and descaling product is displayed in addition to the warning signal (SIG), such that the quantity of water (W) used which does not exceed the predetermined threshold (S) is displayed.

10. Method according to one of the preceding claims,
**characterised in that**
individual predetermined critical threshold values (S) can be assigned to different structural designs of the coffee machine (1).

11. Computer program product,
which contains instructions that can be executed by a computer system such that the computer system carries out the method according to one of claims 1 to 10 when executing the computer program product.

12. Coffee machine (1), in particular fully automatic coffee machine, for preparing a coffee product,
- with a brewing chamber (5) for preparing the coffee product, in particular made of coffee beans and water (W),
- with a water tank (2) for storing the water (W),
- with a water pump (2) for conveying the water (W), preferably from the water tank (3), particularly preferably into the brewing chamber (5),
- with an open-loop/closed-loop control facility (6) for controlling the preparation of the coffee product, which is configured/programmed for carrying out the method according to one of claims 1 to 10.

13. Arrangement (20),
with a coffee machine (1) according to claim 12,
with a server (10) which is connected to the coffee machine (1), in particular to the open-loop/closed loop control facility (6) of the coffee machine (1), in a manner in which it can transfer data or does transfer data, such that an exchange of data relating to the decalcification process (EKV) between the coffee machine (1) and the server (10) can take place.

14. Arrangement according to claim 13,
further comprising a mobile device (11), in particular a smartphone (12), which is connected to the coffee machine (1) and/or the server (10) in a manner in which it can transfer data such that the warning signal can be displayed by the mobile device.

15. Arrangement according to claim 14,
**characterised in that**
the method is executed in the mobile device (11).

## Revendications

1. Procédé de surveillance d'un processus de détartrage (EKV) dans une machine à café (1), en particulier dans une machine à café intégralement automatique, pour la préparation d'un produit à base de café, selon lequel la quantité (M) d'eau (W) utilisée pour un processus de détartrage (EKV) exécuté au préalable est déterminée ou au moins estimée et un signal d'avertissement (SIG) est généré au cas où la quantité déterminée (M) d'eau (W) excède une valeur seuil critique prédéterminée (S).

2. Procédé selon la revendication 1, **caractérisé en ce que** le signal d'avertissement (SIG) n'est généré que si, lors d'au moins deux, de préférence plusieurs, opérations de détartrage effectuées en particulier successivement, la valeur seuil critique prédéterminée (S) a été excédée au moins deux fois.

3. Procédé selon la revendication 1 ou 2, **caractérisé en ce que**
- pendant le processus de détartrage (EKV), une pompe à eau (2) de la machine à café (1) refoule au moins par intermittence de l'eau (W) au départ d'un réservoir d'eau (3) de la machine à café (1),
- une quantité (M) d'eau (W) utilisée pour le processus de détartrage (EKV) est déterminée sur la base d'une durée de fonctionnement de pompe (T_P) de la pompe à eau (2) pendant le processus de détartrage (EKV).

4. Procédé selon la revendication 3, **caractérisé en ce que** la durée de fonctionnement de pompe (T_P) est déterminée sur la base d'une durée de processus (T_EKV) de l'ensemble du processus de détartrage (EKV).

5. Procédé selon la revendication 3 ou 4, **caractérisé en ce que**, pour la détermination de la durée de fonctionnement de pompe (T_P) sur la base de la durée de processus (T_EKV), la durée de processus est combinée à au moins un paramètre d'exploitation de la machine à café (1).

6. Procédé selon la revendication 4 ou 5, **caractérisé en ce que**
- au cours du processus de détartrage (EKV), la durée de processus (T_EKV) est transmise par la machine à café (1) à un serveur (10) relié à la machine à café (1) de manière à pouvoir transmettre des données,
- la durée de processus (T_EKV) pour la détermination de la quantité (M) d'eau (W) utilisée pour le processus de détartrage (EKV) est appelée par le serveur (10).

7. Procédé selon l'une des revendications précédentes, **caractérisé en ce que** le signal d'avertissement (SIG) est affiché par un dispositif d'affichage (4) de la machine à café (1).

8. Procédé selon l'une des revendications précédentes, **caractérisé en ce que** le signal d'avertissement (SIG) est transmis à un appareil mobile (11), en particulier un smartphone (12), et affiché par celui-ci.

9. Procédé selon l'une des revendications précédentes, **caractérisé en ce qu'**outre le signal d'avertissement (SIG), une indication est affichée quant à la façon dont un futur processus de détartrage (EKV) peut s'exécuter avec un rapport de mélange autorisé d'eau (W) et d'agent détartrant, de sorte que la quantité d'eau (W) utilisée n'excède pas la valeur seuil prédéterminée (S).

10. Procédé selon l'une des revendications précédentes, **caractérisé en ce que** des valeurs seuils critiques (S) prédéterminées individuelles sont affectées à différents modèles de la machine à café (1).

11. Produit de programme informatique contenant des instructions lisibles par un système informatique, de sorte que, lors de l'exécution du produit de programme informatique, le système informatique exécute le procédé selon l'une des revendications 1 à 10.

12. Machine à café (1), en particulier machine à café intégralement automatique, pour la préparation d'un produit à base de café,
- avec une chambre de percolation (5) pour la préparation du produit à base de café, en particulier à partir de grains de café et d'eau (W),
- avec un réservoir d'eau (2) pour le stockage de l'eau (W),
- avec une pompe à eau (2) pour le refoulement de l'eau (W), de préférence au départ du réservoir d'eau (3), de façon particulièrement préférée dans la chambre de percolation (5),
- avec un dispositif de commande/régulation (6) pour la commande de la préparation du produit à base de café, qui est aménagé/programmé pour l'exécution du procédé selon l'une des revendications 1 à 10.

13. Agencement (20), avec une machine à café (1) selon la revendication 12, avec un serveur (10) qui est relié à la machine à café (1), en particulier au dispositif de commande/régulation (6) de la machine à café (1), de manière à pouvoir transmettre des données ou à transmettre des données, de sorte que des données concernant le processus de détartrage (EKV) puissent être échangées entre la machine à café (1) et le serveur (10).

14. Agencement selon la revendication 13, comprenant en outre un appareil mobile (11), en particulier un smartphone (12), qui est relié à la machine à café (1) ou/et au serveur (10) de manière à pouvoir transmettre des données, de sorte que l'appareil mobile peut afficher le signal d'avertissement.

15. Agencement selon la revendication 14, **caractérisé en ce que** le procédé est exécuté dans l'appareil mobile (11).
